# EUROPEAN PATENT APPLICATION

(11) **EP 2 105 929 A1**
(43) Date of publication of application: **30.09.2009**
(21) Application number: 08153437.2
(22) Date of filing: 27.03.2008
(51) Int. Cl.: G11B 27/034, G06T 15/00, H04N 5/262, H04N 5/74

(54) **Digital video effects import**

(71) Applicant: Barco NV, 8500 Kortrijk (BE)
(72) Inventor: Ostyn, Claude, 8310 Assebroek (BE); Gerets, Peter, 8800 Roeselare (BE)
(74) Representative: Hertoghe, Kris Angèle Louisa

(57) **Abstract**

The present invention relates to a system, application and method for processing video data. A system for processing video data comprises a rendering engine for rendering the video data. The rendering engine comprises a framework to use video effects, whereby the framework comprises an import means for importing an external video effect plug-in for the rendering engine.

## Description

### Technical field of the invention

The present invention relates to the field of processing video data. More particularly, the present invention relates to methods and systems for processing video data.

### Background of the invention

The introduction of digital video has led to an increasing activity on video processing. Often this is done using a combination of classical hardware in combination with computer based graphics processing techniques. Video processing may be done on hybrid systems for video processing, which are composed of hardware front end processing, such as for example video decoding front ends and back end components such as for example video formatters. Whereas in the past, for converting video signals between different resolution/aspect-ratio settings, often a video scaler was used, at present this is often performed by a video processing unit which is basically composed of a graphical processing unit driven by a central processing unit.

Such a video processing unit may not only be used for scaling the resolution/aspect-ratio settings, it often also be used as a rendering system for video and visual effects. Such video and visual effects may for example be two dimensional or three dimensional digital video effects.
One option for performing particular digital video effects using a rendering system as described above is to provide an application programming interface (API) whereon the user can write his own effect plug-ins. The latter nevertheless has the disadvantage that a lot of programming needs to be performed on the system.

Alternatively, a user may for processing of video data using digital video effects use professional video editing software. Such professional video editing software may for example comprise applications like Final Cut Pro or Adobe Premiere. A number of developments has been performed in this software, resulting in a large number of good, creative effect plug-ins for processing video data being available. If a user is willing to use the professional video editing software, he processes the video data through the professional video editing software and then uses the output of the professional video editing software as input for a hybrid or computer based rendering system. The latter is labour-intensive and time consuming.

### Summary of the invention

It is an object of embodiments of the present invention to provide good apparatus and/or methods for processing video data. It is an advantage of embodiments according to the present invention that user-friendly methods and systems are provided for processing video data using digital video effects. It is an advantage of embodiments according to the present invention that systems and methods are provided wherein a user can make and use own developed digital video effects, e.g. previously developed using professional video editing software. It is an advantage of embodiments according to the present invention that existing digital video effect plug-ins can be used on a video data rendering system. It is an advantage of embodiments according to the present invention that use and extension of existing effects can be performed, resulting in reduced efforts needed for obtaining plug-ins for given digital video effects to be obtained. The different effects may for example be shared in a community of video processing people.

The above objective is accomplished by a method and device according to the present invention.

The present invention relates to a system for processing video data, the system comprising a rendering engine for rendering the video data, the rendering engine comprising a framework to use video effects, whereby the framework comprises an import means for importing an external video effect plug-in for the rendering engine. It is an advantage according to embodiments of the present invention that a user friendly rendering system is obtained. It is an advantage of embodiments according to the present invention that a user can use a preferred plug-in developed in a third party software package.

The video effects may be digital video effects. It is an advantage according to embodiments of the present invention that pre-made digital video effects can be used in a rendering engine.

The framework furthermore may be adapted with a programming means for in-situ writing video effect plug-ins on the framework. It is an advantage of embodiments according to the present invention that both ready made video effect plug-ins can be introduced and programming of video effect plug-ins may be performed.

The framework furthermore may comprise a registering means adapted for registering the external video effect plug-ins.

The framework furthermore may be adapted for exchanging data with the external video effect plug-in application via a selectable protocol.

The video effects may be video effects defined completely off-line in a mainstream DVE effect generation software package.

The present invention also relates to an application for processing video data, the application comprising a rendering means for rendering the video data, and an application programming interface providing an input functionality for importing an external video effect plug-in for the rendering engine.

The present invention furthermore relates to a method for processing video data, the method comprising receiving video data from an external video source rendering said video data, wherein said rendering comprises selecting an imported external video effect plug-in, and applying processing said video data with an imported external video effect plug-in.

The present invention also relates to a method for setting up a processing system for processing video data, the method comprising importing a ready made external video effect plug-in in a rendering system for processing said video data.

The present invention furthermore relates to a computer program product for, when executed on a computer program, performing a method as described above.

The present invention also relates to a machine readable data storage device storing the computer program product and/or the transmission thereof over a local or wide area telecommunications network.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The teachings of the present invention permit the design of improved methods and apparatus for processing video data.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 is a schematic representation of a system for video data processing comprising an importing means for importing digital video effect plug-ins according to an embodiment of the present invention.
FIG. 2 is a schematic representation of an application for importing digital video effect plug-ins, according to an embodiment of the present invention.
FIG. 3 is a schematic representation of a system for video data processing wherein the importing means comprises plug-in seats for importing digital video effect plug-ins according to an embodiment of the present invention.
FIG. 4 is a schematic illustration of a computing device which may be used for running a computer program product for performing a method for processing video data according to an embodiment of the present invention.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.
Where in the present application reference is made to a digital video effect (DVE) reference is an effect created by taking existing video data (e.g. an existing video source) and manipulating a property thereof in the video frame. Manipulating a property may for example be manipulating a position of the video data, e.g. video source, within the video frame. An example of properties that may be manipulated are position, colour and transparency (alpha channel).

Where in the present application reference is made to a plugin, also referred to as plug-in, addin, add-in, addon or add-on, reference is made to a computer program that interacts with a host application to provide a certain functionality, e.g. a specific functionality on demand. Often the host application may provide services which the plug-in can use, e.g. including a way for plugins to register themselves with the host application and a protocol by which data is exchanged with plugins. Such plugins may be dependent on the services of the host application.
Where in the present application reference is made to an application programming interface (API), reference is made to a language and/or message format used by an application program to communicate with the operating system or some other control program such as for example communication protocols. APIs may for example be implemented by writing function calls in the program, which provide the linkage to the required subroutine for execution. An API thus may imply that some program module is available in the computer to perform the operation or that it must be linked into the existing program to perform tasks. The application programming interface also can be a loosely coupled protocol based on XML or scripting languages.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In a first aspect, the present invention relates to a system for processing video data. Such data may for example be digital video data. The video data may be obtained in any suitable way, i.e. from any type of video data source, such as for example a video data recorder, a camera, a video data generator, etc. The information may be recorded and provided to the system in real time o it may be stored information. For obtaining such video data, the system may comprises a video data obtaining means, such as for example an input port. According to embodiments of the present invention, the system comprises a rendering engine for rendering the video data. According to embodiments of the present invention, rendering may comprise the process of calculating effects in a video editing file, i.e. in video data, in order to produce the final video output. It may comprise both a scaler function for providing appropriate resolution/aspect-ratio settings as well as a function for applying or integrating video and visual effects. Rendering may be performed in real time as well as via pre-rendering, as rendering is a computationally intensive process. The rendering engine may be a stand-alone processing device, e.g. not integrated into a larger modelling or animation package. The rendering engine may be dedicated to process video data. The rendering engine may be outputting processed video in real-time. Such video data may be rendered, e.g. for a projector or a display wall, e.g. a LED display wall. The rendering engine differs from video editing applications. The rendering engine may be based on open source programming or may be based on commercial programming. The rendering engine may comprise or consist of a video processing unit which may itself comprise a graphical processing unit driven by a central processing unit. The rendering engine may comprise functionality based on for example rasterisation, including scanline rendering, ray casting, radiosity or ray tracing or a combination thereof.
As indicated above, the rendering engine is adapted for applying or providing video and visual effects, generally referred to as video effects in the present application. Such video effects may be digital video effects. It may be two dimensional or three dimensional video effects. Such video effects may for example be any of shading effects, texture-mapping, bump-mapping, fogging, shadowing, soft shadowing, reflection effects, transparency or opacity effects, translucency effects, refraction effects, diffraction effects, indirect illumination effects, caustics effects, depth of field effects, motion blur effects, photorealistic morphing effects, non-photorealistic rendering effects, etc. Furthermore different video effects may be combined.

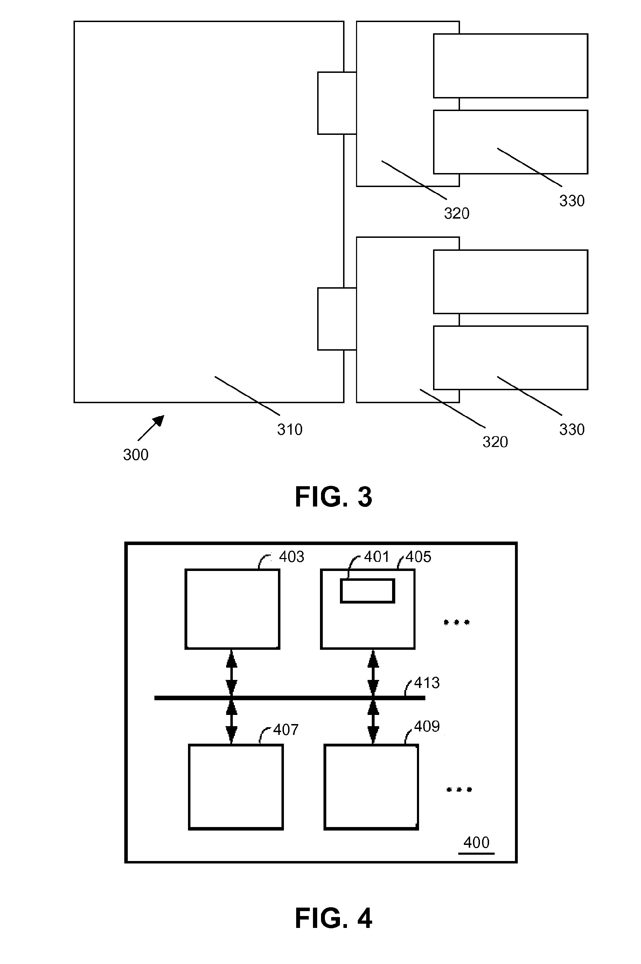

For applying or providing video effects, the rendering engine according to embodiments of the present invention comprises a framework for using such video effects. In conventional rendering engines, video effects usually are predefined. According to embodiments of the present invention, the framework for using video effects is adapted so that the video effects do not have to be fixed, e.g. predefined, but it has the possibility to introduce video effects. The framework therefore comprises an import means for importing one or more external video effect plug-ins for the rendering engine. Such external video effect plug-ings may fore example be defined completely off-line in a mainstream digital video effect generation software package such as for example but not limited to Final Cut Pro ® by Apple, such as for example Final Cut Pro 6, or Adobe Premiere or Adobe Premiere Pro ® by Adobe Creative, such as for example Adobe Premiere Pro CS3. The import means and/or the framework may be adapted so that it provides easy importation of the external video effect, which may be ready made. The import means therefore may comprise a component that is suitable for receiving plug-ins to be imported on the rendering engine. Such a component may be referred to as a plug-in seat. The plug-in seat may provide the capability of importing plug-ins from a particular vendor or third party software application. The plug-in seat may act as the interface between the render engine and the plug-in. By way of illustration, the present invention not being limited thereto, an illustration of the presence of a plug-in seat component in the application is shown in FIG. 3. The plug-in seat may be developed for a particular vendor or third party software and it may provide the translation between the third party plug-in and the render engine framework. Alternatively or in addition thereto, an application programming interface may be provided for allowing third parties to write an own plug-in seat for particular plug-ins and allowing translation to the framework or rendering engine.

In order to facilitate the importing and use of the external video effect plug-ins, the framework furthermore may comprise a registering means adapted for registering the external video effect plug-ins in the rendering system. The latter may provide for example a link to the address of the instruction for executing the plug-in. It furthermore may provide a link to the data that is processed.

In order to facilitate the importing and use of external video effect plugins, the framework furthermore may be adapted for exchanging data with the external video effect plug-in application via a selectable protocol. In one embodiment, the protocol for exchanging data will be selectable based on the software package wherein the video effect is generated. The framework therefore may comprise a protocol selection means. The latter may provide a selection opportunity on a user interface. Furthermore, a memory may be available wherein different protocols are or can be stored. It thus is an advantage of embodiments according to the present invention that the user can define its own video effects with commonly known tools and import the effects directly into the rendering system, without the need for specific programming of effects. The different protocols that may be used may provide communication between a plug-in seat and 3^{rd} party effect plug-ins and therefore will depend on the particular third party software developer and optionally also from the 3^{rd} party plug-in that is to be imported. The plug-in seat may for example use a software developers kit or any other form of application programming interface, e.g. a software developers kit or any other form of application programming interface made available by third party vendors. By way of illustration, the present invention not being limited thereby, two particular examples are given. For example in the case of Adobe Premiere one example of a software developers kit provided by the third party vendor may be Adobe After Effects CS3 SDK. For example in the case of Final Cut Pro, Apple provides an FxPlug software developers kit.

In particular embodiments according to the present invention, the framework furthermore may be adapted with a programming means for in-situ writing video effect plug-ins on the framework. Besides importing existing video effect plug-ins, such a system thus also may allow generation of video effect plug-ins on the framework by the user, or adapting fixed or imported video effects that are available or imported on the framework.

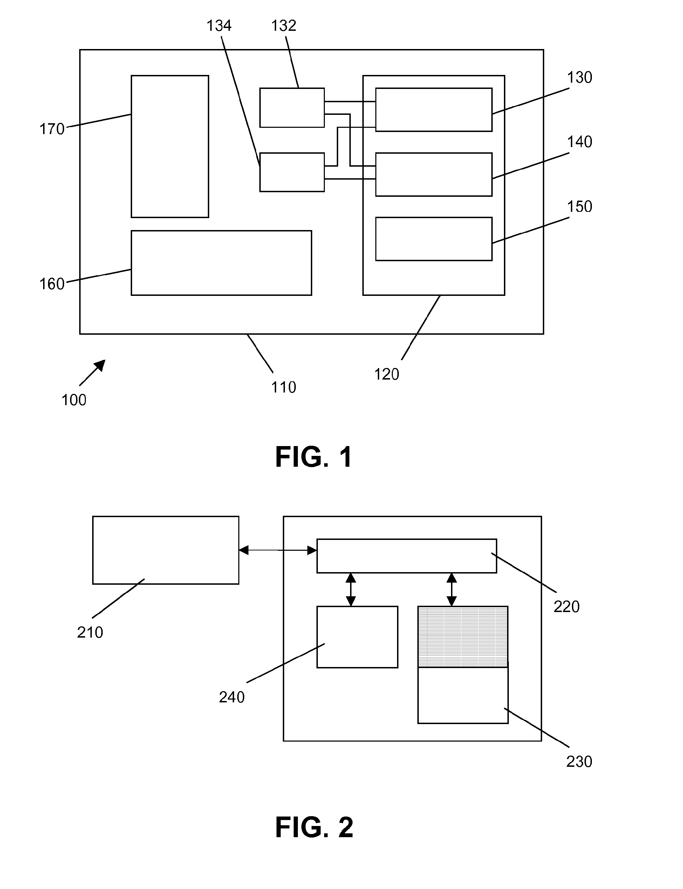

By way of illustration, the present invention not being limited thereto, an example of a video data processing system is shown in FIG. 1, showing standard and optional components according to embodiments of the present invention. The video data processing system 100 comprises a rendering engine 110 for rendering the video data. The rendering engine 110 comprises a framework 120 for using, applying, providing, maintaining and importing video effects. The framework 120 thereby comprises a video effect importing means 130 for importing external video effects. Such importing means 130 may comprise or may be connected to a registering means 132 and may be connected to a protocol selection means 134, as described above. The system furthermore also may comprise a video effect programming means 140 for generating video effects on the framework, a storage for predetermined video effects 150 present in predefined form on the framework 120. Other components which may be part of the framework, components thereof or of the rendering engine are a processing means 160 and a video data importing means. Further components also may be present in the rendering engine.

It is an advantage of embodiments according to the present invention that it allows third-party developers to more easily create capabilities to extend an application, to support features that are not foreseen yet, etc.

It is an advantage of embodiments according to the present invention that it allows collecting and/or generating a pool of video effect plug-ins that can be used throughout the video data processing community.

It is an advantage of embodiments according to embodiments of the present invention that these allow the user to be able to use his favorite video effect plug-in from his favorite video editing software.

It is an advantage of embodiments according to the present invention that the system comprises an import facility to import existing video effect plugins into the rendering engine or media server, whereby the redering engine or media server is different from the third party application wherein the plug-in is developed.

In a second aspect, the present invention relates to an application for processing video data, the application comprising a rendering means for rendering the video data. As for the system described in the first aspect, the video data may be any type of video data. The application furthermore may comprise an application programming interface providing an input functionality for importing an external video effect plug-in for the rendering engine. The application furthermore may be adapted for registering the imported external applications and for selecting a suitable protocol for data exchange, communication and use of the external video effect plug-in. The application also may be adapted for programming new video-effect plug-ins directly on a rendering device and/or for adjusting imported or predefined video-effect plugins, imported from a third party video effect generation software package or stored on the rendering engine in a predefined form. The application may be especially suitable for use with a video data processing system as described according to embodiments of the first aspect or may result in a system according to embodiments of the first aspect when running on a rendering machine. The application may furthermore have the functionality of one, more or all of the components of the video data processing system as described above. By way of illustration, embodiments of the present invention not being limited thereto, an example of an application is shown in FIG. 2. In FIG. 2, a rendering engine 210 is shown comprising or in contact with an effect engine 220 adapted for inducing video effects on video data. The effect engine 220 is, e.g. via a user interface, adapted for importing an external video effect 230. Importing of an external video effect 230 may be performed by receiving an external video effect plug-in 230 at an import port. Alternatively, a custom made video-effect 240, programmed at the rendering engine or the effect engine also may be used and can be obtained e.g. from a storage memory.

In a third aspect, the present invention relates to a method for processing video data. The method comprises receiving video data from an external video source and rendering the video data. The rendering of video data thereby may comprise selecting an imported external video effect plug-in and applying processing of the video data with the imported external video effect plug-in. The method furthermore may comprise the sep of importing a ready made external video effect plug-in in a rendering system for processing the video data. Furthermore registering of the video effect plug-in may be performed and a protocol for performing appropriate data communication with the video effect plug-in may be selected and/or used. In embodiments according to the present invention, the method furthermore may comprise applying a self-written video effect plug-in, written on the rendering system platform. According to embodiments of the present invention, the method furthermore may comprise amending an external video effect plug-in received on the rendering system. Other method steps, expressing the functionality or part of the functionality of one, more or all of the components of the video data processing system may furthermore be comprised in methods according to embodiments of the present invention.

In a further aspect, the above-described method embodiments of the present invention may be implemented in a processing system 300 such as shown in Fig. 3. Fig. 3 shows one configuration of processing system 300 that includes at least one programmable processor 303 coupled to a memory subsystem 305 that includes at least one form of memory, e.g., RAM, ROM, and so forth. It is to be noted that the processor 303 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. The processing system may include a storage subsystem 307 that has at least one disk drive and/or CD-ROM drive and/or DVD drive. In some implementations, a display system, a keyboard, and a pointing device may be included as part of a user interface subsystem 309 to provide for a user to manually input information. Ports for inputting and outputting data also may be included. More elements such as network connections, interfaces to various devices, and so forth, may be included, but are not illustrated in Fig. 3. The various elements of the processing system 300 may be coupled in various ways, including via a bus subsystem 313 shown in Fig. 3 for simplicity as a single bus, but will be understood to those in the art to include a system of at least one bus. The memory of the memory subsystem 305 may at some time hold part or all (in either case shown as 311) of a set of instructions that when executed on the processing system 300 implement the steps of the method embodiments described herein. Thus, while a processing system 300 such as shown in Fig. 3 is prior art, a system that includes the instructions to implement aspects of the methods for processing video data is not prior art, and therefore Fig. 3 is not labelled as prior art.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

It is to be understood that although preferred embodiments, specific constructions and configurations, as well as materials, have been discussed herein for devices according to the present invention, various changes or modifications in form and detail may be made without departing from the scope of this invention as defined by the appended claims. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A system for processing video data, the system comprising a rendering engine for rendering the video data, the rendering engine comprising a framework to use video effects, whereby the framework comprises an import means for importing an external video effect plug-in for the rendering engine.

2. A system according to claim 1, wherein the video effects are digital video effects.

3. A system according to any of claims 1 to 2, wherein the framework furthermore is adapted with a programming means for in-situ writing video effect plug-ins on the framework.

4. A system according to any of the previous claims, wherein the framework furthermore comprises a registering means adapted for registering the external video effect plug-ins.

5. A system according to any of the previous claims, wherein the framework furthermore is adapted for exchanging data with the external video effect plug-in application via a selectable protocol.

6. A system according to any of the previous claims, wherein the video effects are video effects defined completely off-line in a mainstream DVE effect generation software package.

7. An application for processing video data, the application comprising
- a rendering means for rendering the video data, and
- an application programming interface providing an input functionality for importing an external video effect plug-in for the rendering engine.

8. A method for processing video data, the method comprising
- receiving video data from an external video source
- rendering said video data,
wherein said rendering comprises
- selecting an imported external video effect plug-in, and
- applying processing said video data with an imported external video effect plug-in.

9. A method for setting up a processing system for processing video data, the method comprising importing a ready made external video effect plugin in a rendering system for processing said video data.

10. A computer program product for, when executed on a computer program, performing a method according to any of claims 8 to 9.

11. A machine readable data storage device storing the computer program product of claim 10.

12. Transmission of the computer program product of claim 10 over a local or wide area telecommunications network.
